# EUROPEAN PATENT APPLICATION

(11) **EP 2 273 415 A1**
(43) Date of publication of application: **12.01.2011**
(21) Application number: 09734831.2
(22) Date of filing: 21.04.2009
(51) Int. Cl.: G06F 21/20, H04L 9/32

(54) **INFORMATION PROCESSING SYSTEM, INFORMATION PROCESSING DEVICE, MOBILE COMMUNICATION DEVICE, AND METHOD FOR MANAGING USER INFORMATION USED FOR THEM**

(30) Priority: 23.04.2008 JP 2008111938
(71) Applicant: NEC Corporation, Minato-ku Tokyo 108-8001 (JP)
(72) Inventor: TETSUHASHI, Hideaki, Tokyo 108-8001 (JP)
(74) Representative: Vossius & Partner
(86) International application number: PCT/JP2009/057938
(87) International publication number: WO 2009/131130

(57) **Abstract**

An information processing system is provided that guarantees personal authentication only while a mobile communication device is connected to allow user information, stored in the mobile communication device, to be used while using a PC on which a guest account is used. In the information processing system, the mobile communication device is used as an authentication key when a user logs into an information processing device, and information on a personal setting environment stored in the information processing device and information on application software used in the information processing device are acquired and saved into the mobile communication device, which is used as the authentication key, as personal account information (FIG. 1).

## Description

### TECHNICAL FIELD

### [CROSS-REFERENCE TO RELATED APPLICATIONS]

The present invention claims priority from Japanese Patent Application 2008-111938 (filed on April 23, 2008) the content of which is hereby incorporated in its entirety by reference into this specification.
The present invention relates to an information processing system, an information processing device, a mobile communication device, and a user information management method used for the system and devices, and more particularly to a method for managing user information registered in advance in application software running in a PC(Personal Computer).

### BACKGROUND ART

A PC user tends to have an interest in similar things and visits similar sites using similar search methods. That is, it is desirable that all such information be managed integrally as account information.

As the information described above, there are history information managed by a web browser such as IE[Internet Explorer(registered trademark)], bookmarks [function to record frequently-visited web site addresses (URL: Uniform Resource Locator)], search words, autocompletes(function to remember input from the keyboard for predicting and displaying the next input contents based on the past input history), and cookies (mechanism used by a website provider to temporarily store and save information on a visitor in the visitor's computer).

As a method for integrally managing the information described above, a method is proposed in which the information common to one user who uses multiple terminal devices or the information common to multiple users who share one terminal device is moved to or from a mobile terminal (for example, see Patent Document 1). In this case, when the terminal device is started with the mobile terminal connected, application software for managing the common information described above is started to move the common information.

### PRIOR ART DOCUMENTS

### PATENT DOCUMENTS

Patent Document 1:
Japanese Patent Publication Kokai JP2002-116966A

### DISCLOSURE OF THE INVENTION

### PROBLEMS TO BE SOLVED BY THE INVENTION

The disclosure of Patent Document 1 given above is hereby incorporated by reference into this specification. The following analysis is given by the present invention.
However, in an information processing system addressed by the present invention, browsing or search is made, and account information is managed, separately for each device -- for example, for each mobile phone, individually owned PC, or shared PC in an Internet cafe -- that is owned separately because of a difference in the devices, a difference in the OS's (Operating System), a difference in the tools, and a difference in the user information (account information) prepared for each device.

That is, the necessary information and the search words used in a search for the information are peculiar to each individual person and, in some cases, the information used by the user may be similar. However, in an information processing system addressed by the present invention, there are physical barriers such as a difference in the devices, a difference in the OS's, a difference in the tools, and a difference in user information (account information) prepared for each device. These barriers require a mobile phone, an individually-owned PC, and a shared PC in an Internet cafe to have a different setting for each of the devices and require the user to perform a browse or search operation separately for each device.

In addition, an information processing system addressed by the present invention has a security problem that prevents the information on a mobile phone and the information on a PC from being combined easily but requires those types of information to be managed basically as separate account information.

For a PC used by an unspecified number of users such as that in an Internet cafe, there is a security problem and, in addition, there is no way to physically move the data and the setting from the home to a shared PC. Note that the technology described in Patent Document 1 given above allows the user to manage bookmarks or cookies that are common information stored in a mobile phone and a PC; however, because of the same reason described above, the user information such as user's bookmarks, search words, autocompletes, and cookies stored in a mobile phone cannot be used on a shared PC even if the user wants to use it.

Today, software is available that manages all data, such as settings and user data, on a server. However, because some users want to keep their own data to themselves and feel uneasy about their data being managed on the server, there is also a need to make the user feel relieved.

In addition, when all user data is managed on a server, the user must access the server each time the user uses the mobile phone. This requires additional connection times and generates the problem of an operation reaction speed because the user must wait.

In view of the foregoing, it is an object of the present invention to solve the problems described above and to provide an information processing system, an information processing device, a mobile communication device, and a user information management method used for the system and devices for assuring personal authentication only while a mobile communication device is connected and for allowing the user to use user information, stored in the mobile communication device, while using a PC on which the user has a guest account.

### MEANS TO SOLVE THE PROBLEMS

According to a first aspect of the present invention, there is provided an information processing system in which a mobile communication device is used as an authentication key when a user logs into an information processing device and information on a personal setting environment in the information processing device and information on application software used in the information processing device are acquired and saved into the mobile communication device, which is used as the authentication key, as personal account information.

According to a second aspect of the present invention, there is provided an information processing device comprising:
means that performs authentication using a mobile communication device as an authentication key when a user logs into the information processing device; and
means that writes and saves information on a personal setting environment, stored in the information processing device, and information on application software, used in the information processing device, in the mobile communication device, which is used as the authentication key, as personal account information.

According to a third aspect of the present invention, there is provided a mobile communication device, that is used as an authentication key when a user logs into an information processing device and that acquires and saves information on a personal setting environment, stored in the information processing device, and information on application software, used in the information processing device, into the mobile communication device, which is used as the authentication key, as personal account information.

According to a fourth aspect of the present invention, there is provided a user information management method for use in a system in which information on a personal setting environment in an information processing device and information on application software used in the information processing device are used as personal account information, the user information management method comprising:
a step of using a mobile communication device as an authentication key when a user logs into the information processing device; and a step of acquiring and saving the personal account information into the mobile communication device used as the authentication key.

According to a fifth aspect of the present invention, there is provided a program executed by the information processing device or the mobile communication device described above. These programs may be recorded on a computer-readable storage medium.

### EFFECT OF THE INVENTION

The present invention has the configuration, and performs the operation, as described above to provide an effect that personal authentication is assured only while a mobile communication device is connected and that the user can use user information, stored in the mobile communication device, while using a PC on which the user has a guest account.

### BRIEF DESCRIPTION OF THE DRAWINGS

FIG. 1 is a block diagram showing an example of the configuration of an information processing system in a first exemplary embodiment of the present invention.
FIG. 2 is a block diagram showing an example of the configuration of a home PC 10 shown in FIG. 1.
FIG. 3 is a block diagram showing an example of the configuration of a mobile phone shown in FIG. 1.
FIG. 4 is a diagram showing the operation of the information processing system in the first exemplary embodiment of the present invention.
FIG. 5 is a diagram showing the operation of the information processing system in the first exemplary embodiment of the present invention.
FIG. 6 is a diagram showing the operation of the information processing system in the first exemplary embodiment of the present invention.
FIG. 7 is a diagram showing the operation of the information processing system in the first exemplary embodiment of the present invention.
FIG. 8 is a diagram showing the operation of the information processing system in the first exemplary embodiment of the present invention.
FIG. 9 is a diagram showing an application example of the information processing system in the first exemplary embodiment of the present invention.
FIG. 10 is a diagram showing an application example of the information processing system in the first exemplary embodiment of the present invention.
FIG. 11 is a diagram showing an application example of the information processing system in the first exemplary embodiment of the present invention.
FIG. 12 is a diagram showing an application example of the information processing system in the first exemplary embodiment of the present invention.
FIG. 13 is a diagram showing an application example of the information processing system in the first exemplary embodiment of the present invention.
FIG. 14 is a diagram showing an application example of the information processing system in the first exemplary embodiment of the present invention.

### PREFERRED MODES FOR CARRYING OUT THE INVENTION

Next, an exemplary embodiment of the present invention will be described below with reference to the drawings. First, the following describes the outline of an information processing system of the present invention. The information processing system of the present invention has a mechanism in which a PC (Personal Computer) (information processing device) and a mobile phone (mobile communication device), which work as a host and a device respectively when connected to a WLAN (Wireless Local Area Network), authenticate the connection each other. In addition, the information processing system allows a PC user to carry a mobile phone with the user's PC setting saved in the mobile phone.

In the information processing system of the present invention, the user uses a mobile phone as a personal authentication key to certify via the mobile phone that the user, who is going to use a device, is always the user himself or herself so that the personal account information saved in the mobile phone may be used securely. In this case, when the user performs authentication with the user's own PC, the user need not perform any processing but simply brings the user's mobile phone near the PC to automatically update the personal account information, and the authentication is guaranteed only during the connection between the mobile phone and the PC.

When the user of the mobile phone described above uses a third party's PC, the user may use the mobile phone as a personal authentication key to enable personal authentication only during the connection and, though the user logs in the PC using a third party's PC account, may use the user's own account information. The authentication is guaranteed during the connection to the third party's PC and, when the user disconnects from the third party's PC, the information used during the connection is left, not in the third party's PC, but in the mobile phone.

The personal account information described above includes not only bookmarks but cookies, autocompletes, user-entered search keywords, and browsing history, all of which are managed in the text format as an index file (+ data folder). This configuration allows the information to be managed in a similar way even when there is a difference in the OS (Operating System), the browser application software (hereinafter called an application), the settings, and the devices between the home PC and the mobile phone or between the mobile phone and a third party's PC.

In the information processing system of the present invention, the user may use a mobile phone for authentication when logging into a PC to acquire the environment information, such as the PC personal setting, or the application information, such as that on the browser used in the PC, into the mobile phone used for authentication. The information processing system of the present invention allows the user to use the acquired information via the mobile phone outside the home or to use the mobile phone for authentication also in a place where a shared PC, for example, a shared PC in an Internet cafe, is shared by multiple persons and, on the shared PC, use the PC personal environment information or the application information such as that on the browser.

In the information processing system of the present invention, the environment information, such as the PC personal setting, or the application information, which is used by the browser application, may be used on the PC only while the mobile phone and the PC are physically connected wirelessly or via a cable and the authentication state is maintained. In addition, when the mobile phone and the PC are physically disconnected in the information processing system of the present invention, the personal setting and the application data used by a browser, which are set temporarily in the PC, may be deleted and restored to the original state to return the PC environment to the state before the use.

As described above, the information processing system of the present invention allows the user to use a mobile phone, which the user always carries, as a key and as an authentication device and, at the same time, to always use the mobile phone as the master, thus providing the service that removes the barrier described above.

In the information processing system of the present invention, a communication technology for connecting the PC and the mobile phone is used as means for implementing authentication state while the home PC is connected. When the communication technology is Bluetooth (registered trademark) (short-range communication technology), the pairing between the PC and the mobile phone is utilized. When the communication technology is a WLAN, the WLAN control software makes use of two types of mechanism, mechanism for broadcasting that connection has been made to the other party and mechanism for returning an ID(Identifier), which indicates that the connection has been made, from the PC side to the mobile phone, to recognize that the other party has entered the connection state.

When the communication technology is Felica (registered trademark) [non-contact IC (Integrated Circuit) card], the PC and the mobile phone are brought near each other to confirm the Felica (registered trademark) ID, which is unique ID information, for guaranteeing the authentication state.

When the communication technology is USB (Universal Serial Bus), the PC and the mobile phone are connected via a cable to confirm the IMEI (International Mobile Equipment Identity) [a unique number assigned to identify a GSM(Global Systems for Mobile Communications) terminal], which is unique ID information, for guaranteeing the authentication state.

At initialization time, the information in the mobile phone and the information in the PC are merged and the merged information is held in both devices. When the state becomes the authentication state after the initialization, only the difference information is merged, based on the information updated in both devices after the generation of the previous shared information, to minimize the data that will be exchanged.

The master of the information is the information stored in the mobile phone, and the difference data is merged basically in the storage area of the mobile phone with the result reflected on the home PC for sharing the information.

At the same time, as means for authentication on the shared PC, the information processing system of the present invention performs IMEI authentication using the Felica (registered trademark) ID of the mobile phone or using USB connection and, via the application, performs authentication in the server on the Internet.

This authentication is performed to authenticate that the shared PC and the mobile phone are effective while they are connected. For any communication means, the maintenance of the authentication state is effective only when both physical communication and logical communication are maintained.

As means for securely using the personal application information stored in the mobile phone when using the shared PC, a special-purpose application is downloaded into the shared PC at the time the authentication is established in order to acquire the application information, which includes the personal information, from inside the mobile phone using the downloaded application.

Only while authentication is maintained, the application information stored in the mobile phone may be used to perform the web browsing operation with the shared PC used simply as the input device and the display device. Note that an ID different from that used in the home PC, which is tied to the mobile phone, is used in the shared PC [for example, a guest account]. Therefore, any information is not held in the shared PC but all operations are completed in the downloaded application with the information, updated while authentication is maintained, held all in the mobile phone.

When the communication between the PC and the mobile phone is broken, the PC immediately discards the application, downloaded at authentication time, and the authentication information on the mobile phone that has been held by the application, and the shared PC returns to the state before the mobile phone is connected.

The difference in the devices, such as the shared PC, home PC, and mobile phone and the difference in the OS are collected into one unit by the downloaded application that works as a cushion.

As described above, the present invention uses the communication technology to connect the devices (shared PC, PC, and mobile phone) to solve the problems, caused by the physical barriers, with the use of the downloaded application.

According to the present invention, a mobile phone, which the user always carries, is used as a key and as the master of data. This allows the data to be backed up securely when communication is made with an authenticated home PC and also allows the data to be used when communication is made with other PCs, such as a shared PC, without moving the data from the mobile phone, thus solving the security problem.

According to the present invention, personal data is stored in the mobile phone as the master. This eliminates the worry involved in the management of data by a server, thus relieving the user of the worry.

According to the present invention, the user can retrieve necessary data immediately when using the mobile phone because the mobile phone stores information therein. In addition, the present invention makes the user feel that the communication speed is faster even in a device such as a mobile phone which is lower in speed than a fixed PC, thus solving the problem of the operation reaction speed.

### [First exemplary embodiment]

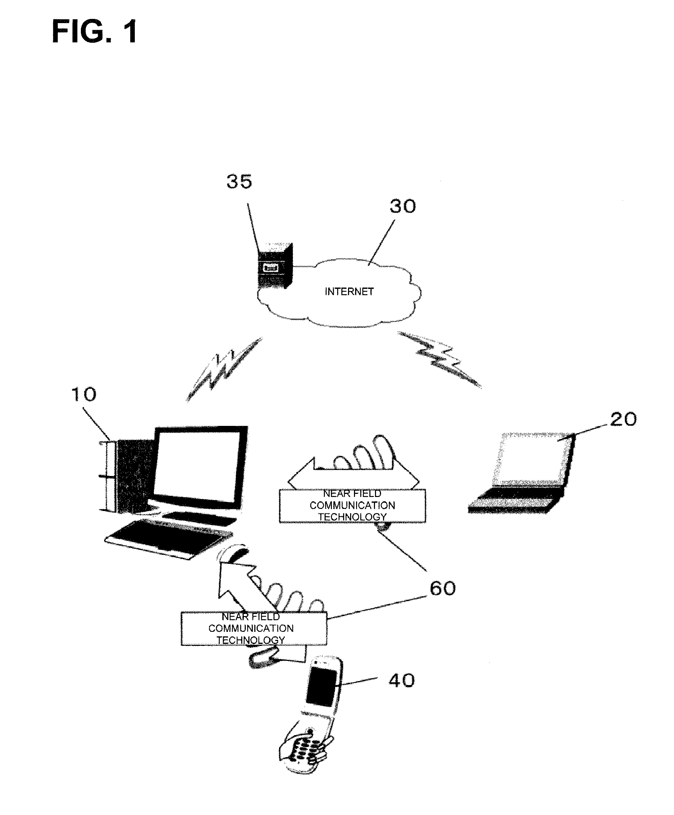

FIG. 1 is a block diagram showing an example of the configuration of an information processing system in a first exemplary embodiment of the present invention. Referring to FIG. 1, the information processing system in the first exemplary embodiment of the present invention comprises a home PC 10, a mobile phone 40 that can be connected through the near-field or direct communication technology 60, a shared PC 20 such as a PC in an Internet cafe, a server 35, and the Internet 30.

FIG. 1 shows the environment in which the present invention is used. The setting of the home PC 10 is saved in the server 35 on the web via the Internet 30. The mobile phone 40 is sometimes connected to the shared PC 20 outside the home.

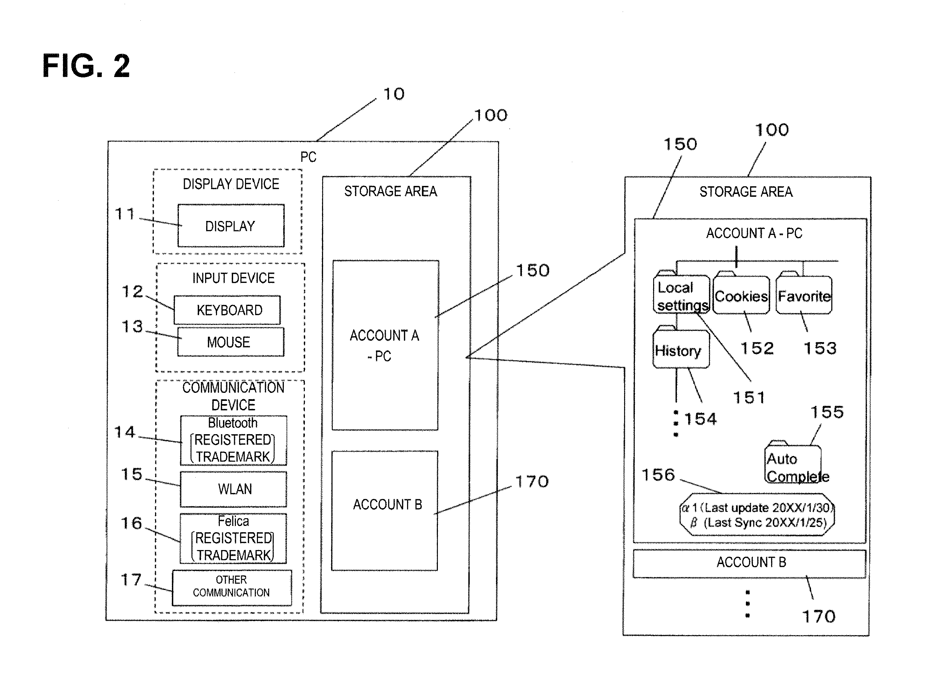

FIG. 2 is a block diagram showing an example of the configuration of the home PC 10 shown in FIG. 1. Referring to FIG. 2, the home PC 10 comprises a display 11 as a display device, and a keyboard 12 and a mouse 13 as input devices.

The home PC 10 further comprises a Bluetooth (registered trademark) port 14, a WLAN port 15, and a Felica (registered trademark) port 16 as a communication device, and a LAN(Local Area Network) port, a Zigbee (registered trademark) port (short-range wireless communication specifications for home electric appliances), a Wibree (short-range communication technology) port, and a USB port as an other communication device port 17. The home PC 10 is connected to the Internet 30 via the LAN port, which is the other communication device port 17, or via the WLAN port 15.

The home PC 10 has a device account A-PC 150 and a family account B 170 in a storage area 100. In the storage area 100, there are local folders for the account A user. (For example, in the default of Windows XP(registered trademark)), there is a History folder 154, which contains history information on Internet Explorer (registered trademark) (hereinafter called IE), below a Local Settings folder 151 and, at the same hierarchical level as that of the Local Settings folder 151, there are an IE Cookies folder 152 and an IE Favorite folder 153.

A registry 155 stores autocompletes (including search words). In addition, the storage area 100 stores update information, included in the account A-PC 150, as a timestamp 156 that includes information on the time synchronized with an external device as SyncTime β. The account B 170 also has the same folder configuration as that described above.

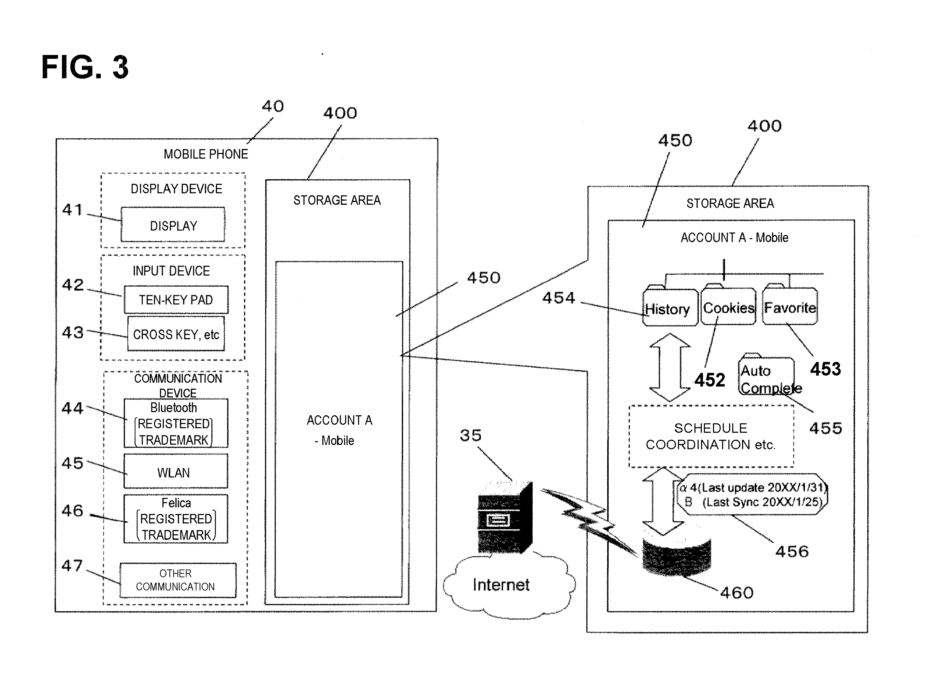

FIG. 3 is a block diagram showing an example of the configuration of the mobile phone 40 shown in FIG. 1. Referring to FIG. 3, the mobile phone 40 has an account A-Mobile 450 that is the account information on the terminal itself (usually, one account).

The mobile phone 40 comprises a display 41 as a display device, and a ten-key pad 42 and a cross key 43 [or a key such as NeuroPointer(registered trademark) on mobile phone] as input devices.

As a communication device, the mobile phone 40 further comprises a Bluetooth (registered trademark) port 44, a WLAN port 45, and a Felica (registered trademark) port 46. The mobile phone 40 further comprises an other communication device port 47, for example, a wireless port for ITU-R (International Telecommunication Union-Radiocommunication Sector) based wireless communication such as LTE (Log Term Evolution), UMB (Ultra Mobile Broadband), HSDPA (High-Speed Downlink Packet Access), W-CDMA (Wideband-Code Division Multiple Access), and CDMA (Code Division Multiple Access) 2000, as well as a WiMax (registered trademark) port (Worldwide Interoperability for Microwave Access), a Zigbee (registered trademark) port, a Wibree port, and a USB port. The mobile phone 40 is connected to the Internet (or a carrier network) via the other communication device port 47.

A storage area 400, which stores user information on the account A-Mobile 450, includes an IE Cookies folder 452, an IE Favorite folder 453, and a History folder 454 at the same hierarchical level. A registry 455 stores autocompletes (including search words).

In addition, the storage area 400 stores update information, included in the account A-Mobile 450, as a timestamp 456 that includes information on the time synchronized with an external device as SyncTime β(*Last Sync 20XX/1/25).

The mobile phone 40 has the schedule function in the main body in almost all cases and, in some cases, has Life History Viewer corresponding to the schedule. In that case, the mobile phone 40 has internal storage 460 provided for use in an operation through a link to the schedule, and the internal storage 460 has a mechanism to store data (primarily, personal authentication data) into the server 35 on the web side.

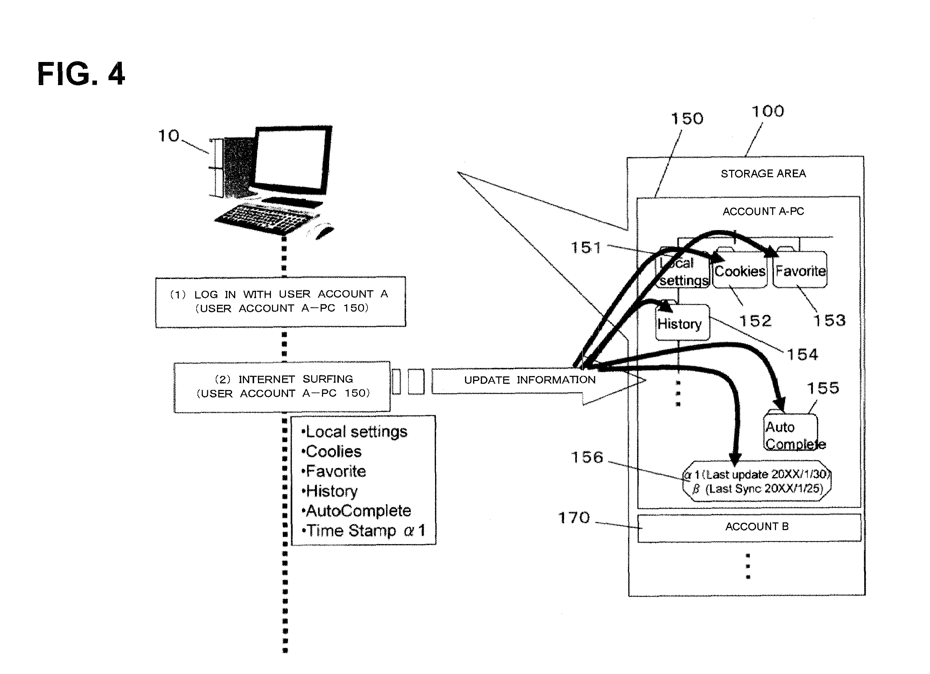

FIG. 4 to FIG. 8 are diagrams showing the operation of the information processing system in the first exemplary embodiment of the present invention. The following describes the operation of the information processing system in the first exemplary embodiment of the present invention with reference to FIG. 1 to FIG. 8.

To start net surfing on the home PC 10 shown in FIG. 4, the user first logs into the home PC 10 using the account A-PC 150. While the user performs net surfing on the home PC 10, cookies are stored in the Cookies folder 152, favorites are stored in the Favorite folder 153, and history is stored in the History folder 154, respectively.

Autocompletes and search words are saved in the registry 155, and the last update time is recorded in the timestamp 156 in the format "Last update α1 (Last update 20XX/1/30).

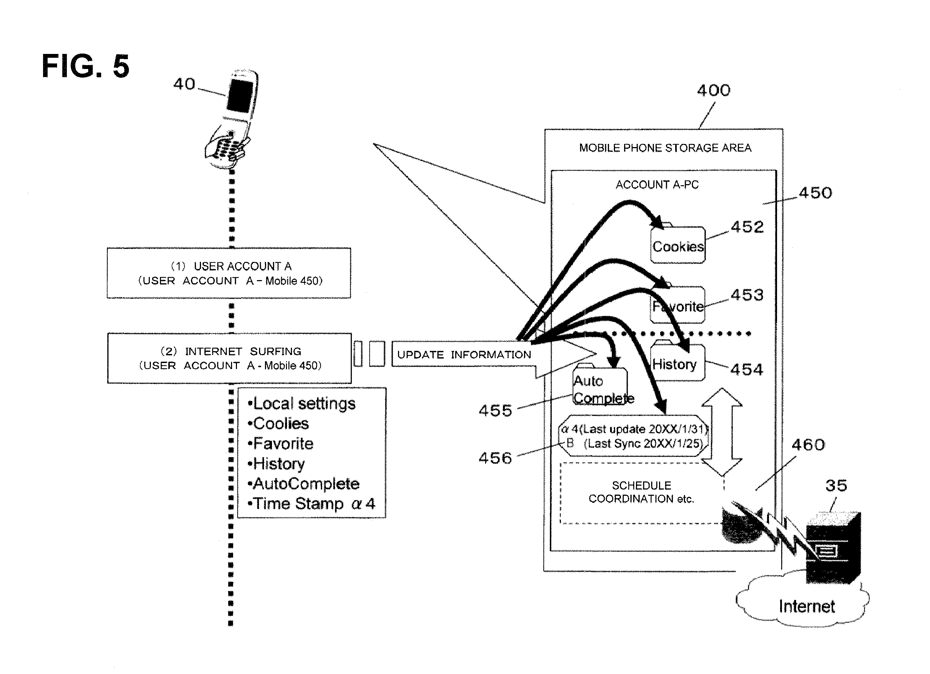

When the user enjoys net surfing on the mobile phone 40 (not on a carrier network but on the Internet) as shown in FIG. 5, the account A-Mobile 450 in the mobile phone 40 is used for browsing.

Cookies are stored in the Cookies folder 452, favorites are stored in the Favorite folder 453, and history is stored in the History folder 454 respectively. Autocompletes and search words are saved in the registry 455, and the last update time is recorded in the timestamp 456 in the format "Last α4(Last update 20XX/1/31).

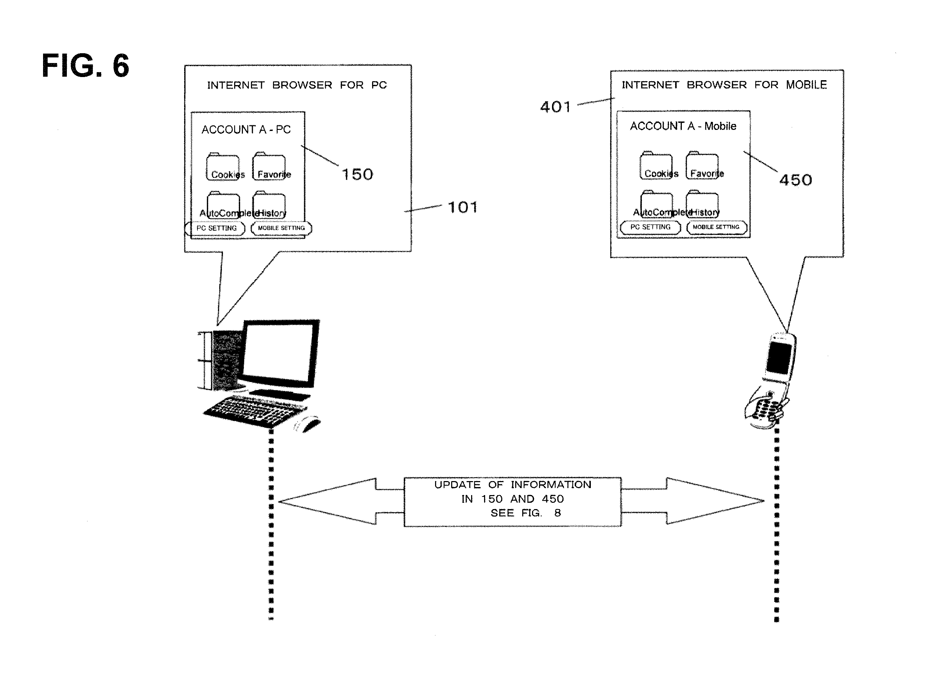

Referring to FIG. 6, two types of browser, such as IE, are provided for browsing the WWW (World Wide Web): one is Internet browser for PC (hereinafter called PC browser) 101 and the other is Internet browser for Mobile (hereinafter called mobile browser) 401. The present invention allows the internal information (cookies, favorites, etc.) on the general-purpose browsers to be processed all together.

The contents of the account A-PC 150 and the contents of the account A-Mobile 450 are exactly the same after being updated.

The user uses the mobile phone 40 as a personal authentication tool [authentication key] to use the PC browser 101 when using the home PC 10. At this time, all updated information is reflected also on the mobile phone 40 to allow the user to use the same information, usually used on the home PC 10, when the user will browse the web using the mobile phone 40 outside the home.

In addition, when using the shared PC 20 installed, for example, in an Internet cafe where the shared account [Guest] is used, the user may use the mobile phone 40 as a personal authentication tool [authentication key] to browse the web using the user's personal account information while personal authentication is guaranteed (only while the shared PC 20 and the mobile phone 40 are connected). When the connection between the shared PC 20 and the mobile phone 40 is broken, the personal information is left the mobile phone 40, which works as the master, to prevent the personal information from being left in the external device (in the shared PC 20).

As shown in FIG. 6, the web browser software (for example, IE) on the PC is always composed of the software engine portion of the PC browser 101 and the account A-PC 150 (personal setting portion for the PC), and the web browser software on the mobile phone 40 is composed of the software engine portion of the mobile browser 401 and the account A-Mobile 450.

The mechanism described above is divided into three saving methods, (1) Bookmark 1000, (2) Cookies & History 2000, and (3) autocomplete & search word 3000, and the information is saved respectively as follows.

(1) In Bookmark 1000, index.txt representing the folder structure of the whole of the original Bookmark is created, (2) in Cookies & History 2000, the binary file index.dat of each of Cookies and History is converted to the text format (index.txt) and the data of each file is copied (Cookies & History folder).

(3) In autocomplete & search word 3000, because both autocompletes and search words are registry information, index.txt of each is created using the registry editor. For autocompletes, the mechanism of Protected Storage (IPstore interface) is used for Windows (registered trademark) 2000 and Windows XP (registered trademark), and WNet Enum Cached Passwords for earlier versions such as Windows (registered trademark) ME and Windows (registered trademark) 95.

For search words, when Windows (registered trademark) Desktop Search is used, "HKEY_CURRENT_USER¥Software¥Microso ft¥WDS¥DB¥S earchString s" is copied to create text.

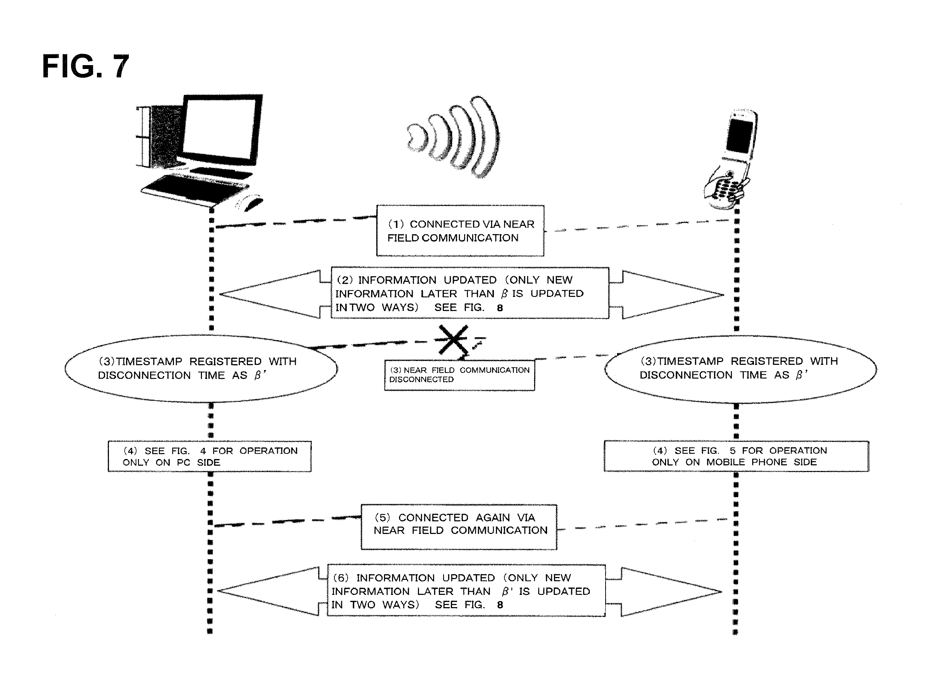

In FIG. 7, assume that the home PC 10 and the mobile phone 40 are already paired when connected via BT[Bluetooth (registered trademark)] or are automatically connected and setup for communication when connected via WLAN. In that case, when the mobile phone 40 is brought nearer to the home PC 10, they are connected via the near field communication technology 60 [paired state, personal authentication completed in FIG. 7 (1)].

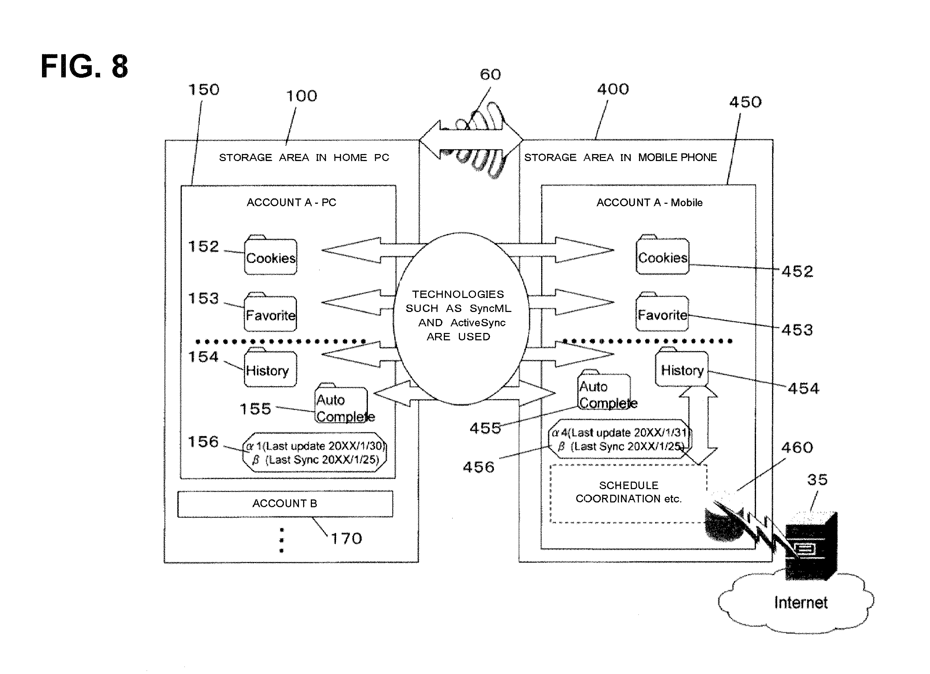

In the account A-PC 150 and the account A-Mobile 450, a check is made for the last synchronization time β and, in both accounts, for the update times later than β. The synchronization means is shown in FIG. 8 [FIG. 7(2)]

FIG. 8 shows the synchronization processing between the account A-PC 150 and the account A-Mobile 450. In this exemplary embodiment, the synchronization processing is performed using the technology such as SyncML(Synchronization Markup Language) or ActiveSync(registered trademark).

The differences (later than time β) in the folders are synchronized in such a way that the cookies are synchronized between the Cookies folder 152 and the Cookies folder 452, the favorites are synchronized between the Favorite folder 153 and the 453, the history is synchronized between the History folder 154 and the History folder 454, and autocompletes and search words are synchronized between the registry 155 and the registry 455.

The synchronization between the home PC 10 and the mobile phone 40 is continually updated as long as the home PC 10 and the mobile phone 40 are connected via the near field communication technology 60, and they are securely synchronized until the connection between the home PC 10 and the mobile phone 40 is broken.

When the connection via the near field communication technology 60 is broken, SyncTime β in the home PC 10 and the mobile phone 40 is updated to β' [FIG. 7(3)]. After that, the home PC 10 and the mobile phone 40 are used separately and their data is updated separately [FIG. 7(4)].

When the home PC 10 and the mobile phone 40 are connected again via the near field communication technology 60 [FIG. 7(5)], the data generated after the previous Synctime β' is updated each other [FIG. 7(6)].

As described above, personal authentication is performed in this exemplary embodiment via the mobile phone 40 by the automatic connection of paired devices via the Bluetooth (registered trademark) port 44, by the initialized automatic connection via the WLAN port 45, or by the device ID confirmation operation via the Felica (registered trademark) port 46. Personal identification is performed also by the connection and the device ID confirmation operation by the direct connection of the device ID via the USB port or by the connection via the other communication device port 47 implemented by the near-future, short-range communication technologies such as wireless USB and NFC(Near Field Connection).

In this exemplary embodiment, whether or not the user, who uses the account A-PC 150 of the home PC 10, is authentic is confirmed by confirming the wired/wireless connection (automatic connection or manual connection), and the authentication is maintained only during the connection (this is called "in-synchronization"). This enables the account A-PC 150 and the account A-Mobile 450 to be synchronized including the in-synchronization operation and the difference information generated from the previous synchronization time β to the current synchronization time.

When the connection between the home PC 10 and the mobile phone 40 is disconnected in this exemplary embodiment, each of the home PC 10 and the mobile phone 40 starts accumulating the usage history beginning at the time the connection is broken. Next time the synchronization is established, the information is updated again between the home PC 10 and the mobile phone 40.

In addition, when the user uses the third-party shared PC 20 (for example, a PC in an Internet cafe) in this exemplary embodiment, the user uses the guest account such as a user account X-PC 250. In this case, the shared PC 20 and the mobile phone 40 are connected via one of the Bluetooth (registered trademark) port 44, WLAN port 45, Felica (registered trademark) port 46, or other communication device port 47 such as a USB cable and, via the Felica (registered trademark) port 46 or the other communication device port 47 such as a USB cable, the device ID of the mobile phone 40 is notified directly to the server 35 on the network via the shared PC 20.

In this exemplary embodiment, personal authentication is performed in this way to implement personal authentication with the mobile phone 40 as the authentication key for assuring personal authentication only during the connection between the shared PC 20 and the mobile phone 40. That is, while using the shared PC 20 that has the guest account 250, the user can make use of the account that has been set up as account A-PC 150=account A-Mobile 450.

In this case, the information in the guest account 250 is not updated, but all history information (=account information) indicating the use of the shared PC 20 is registered in the account A-Mobile 450 of the mobile phone 40.

As shown in FIG. 8 and FIG. 7(2), the difference update method, such as SyncML, is used to update the data between the corresponding folders. In addition, the update data is backed up in the internal storage 460 of the mobile phone 40 in the format usable by applications, such as schedule applications, in the mobile phone 40.

In this case, based on the updated data, the history date/time in the History folder 454 and the schedule date/time in the mobile phone 40 may be saved with association established between them. For example, in response to the query to find "the restaurants which were selected for last year's year-end party but to which we didn't go", the related information may be retrieved easily from the schedule by checking the restaurant-browsing results around the date of the last year's year-end party.

When some amount of information is saved in the internal storage 460 of the main body, the information may be backed up in the external server 35. This utilizes the limited storage of the mobile phone 40.

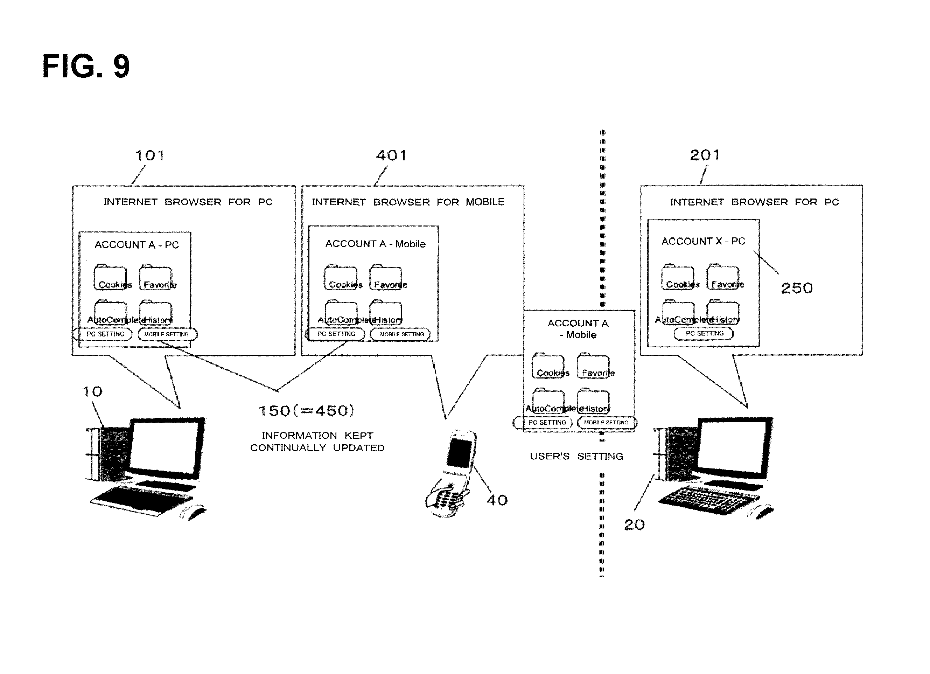

FIG. 9 to FIG. 14 are diagrams showing the application examples of the information processing system in the first exemplary embodiment of the present invention. The following describes the application examples of the information processing system in the first exemplary embodiment of the present invention with reference to FIG. 9 to FIG. 14.

Referring to FIG. 9, the master of the information is the information stored in the mobile phone 40 in this exemplary embodiment. Difference data is merged basically in the storage area 400 of the mobile phone 40, and the result is reflected on the home PC 10 to allow the information to be shared.

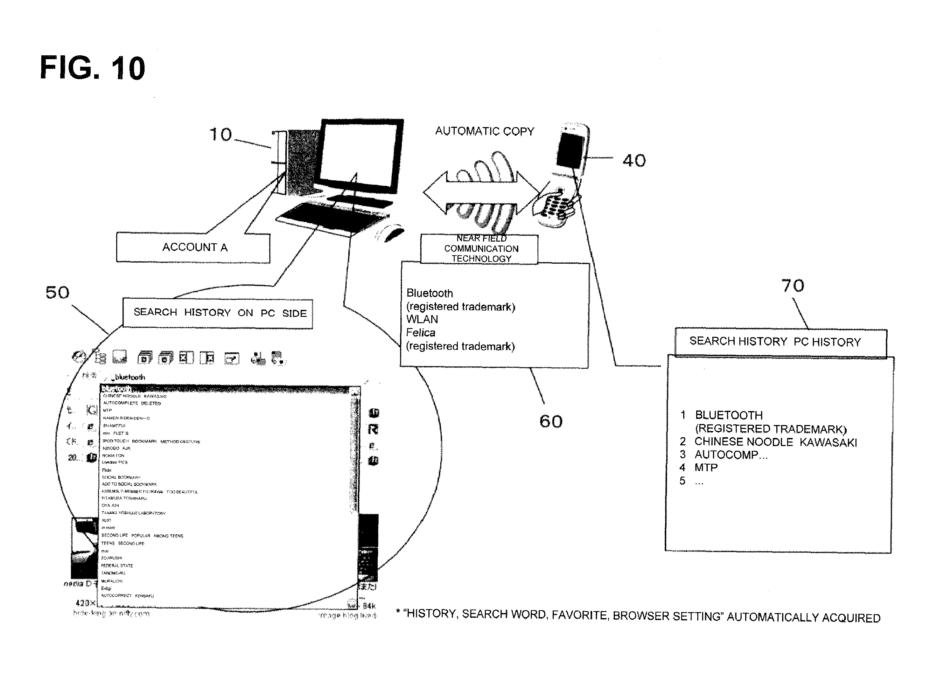

FIG. 10 shows an example in which the mobile phone 40 easily uses the search words stored the home PC 10 in this exemplary embodiment. In this case, the mobile phone 40 automatically acquires a search history 50, stored in the home PC 10, via the near field communication technology 60 to create a search history PC history 70.
That is, the mobile phone 40 automatically acquires "history, search word, browser setting" from the home PC 10.

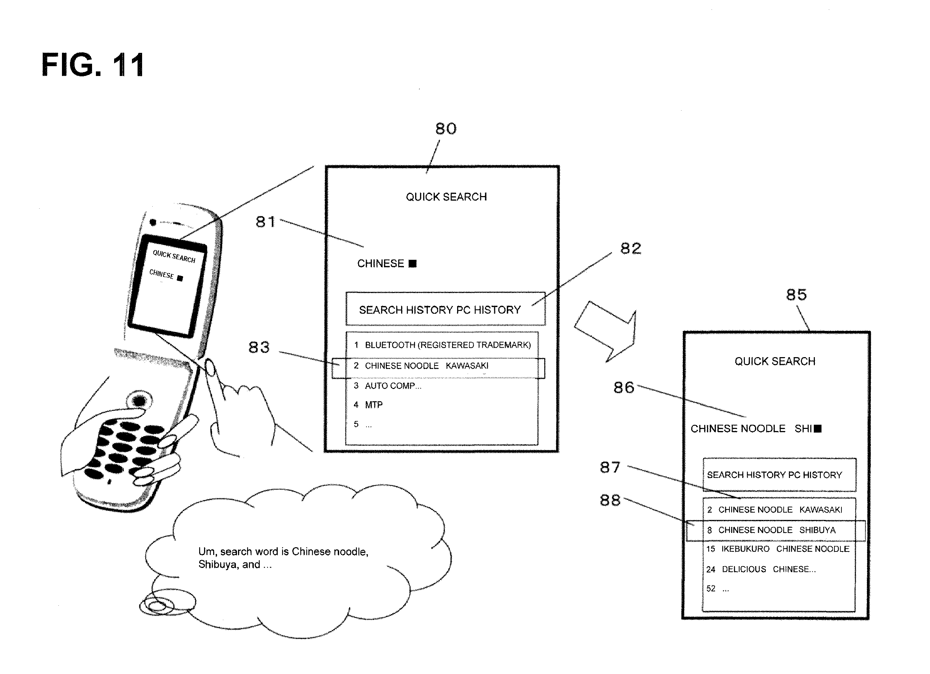

FIG. 11 shows an example in which the candidates are predicted and displayed on a priority basis in this exemplary embodiment based on the search words entered into the mobile phone 40, home PC 10, and shared PC 20 in the past.

For example, when the user enters "Chinese" on a Quick search 80 to find an answer to the self-question "Um, search word is Chinese noodle, Sibuya, and..." (81 in FIG. 11), "Chinese noodle Kawasaki" is selected from a list 82 (83 in FIG. 11) and, when the user enters "Chinese noodle Shi" on a Quick search 85 (86 in FIG. 11), "Chinese noodle Shibuya" is selected from a list 87 (88 in FIG. 11).

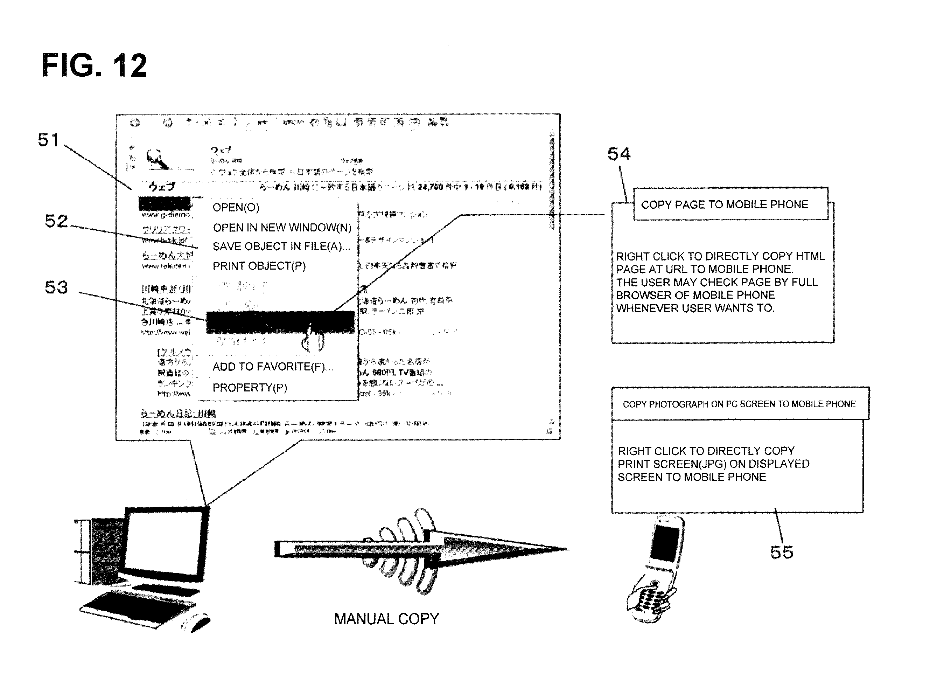

FIG. 12 shows an example in which a web page is copied on the PC side and is saved in the mobile phone. In this case, the PC and the mobile phone are connected in easy connection mode to use the mobile phone as if it was NAS(Network Attached Storage).

FIG. 12 shows the case in which "Copy page to mobile phone" is selected on a display screen 51 on the PC side (52 and 53 in FIG. 12). In "Copy page to mobile phone" 54, the user can right-click the mouse, not shown, to copy the HTML(Hyper Text Markup Language) page at the URL directly to the mobile phone. The copied web page may be checked by a full browser in the mobile phone whenever the user wants to.

In "Copy photograph on PC screen to mobile phone" 55, the user can copy the print screen[JPG(JPEG: Joint Photographic Experts Group)], displayed on screen of the PC, to the mobile phone by right-clicking the mouse.

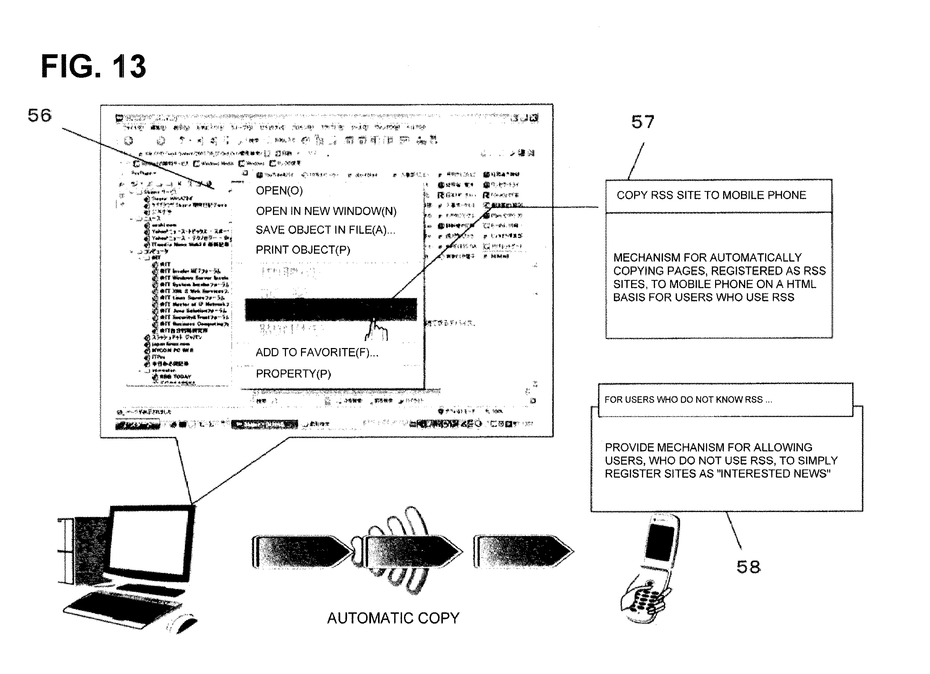

In FIG. 13, RSS[Really Simple Syndication RDF(Resource Description Framework) Site Summary] sites are registered together, and all HTML(Hyper Text Markup Language) files of the RSS files are copied to the mobile phone, for example, during the night.

FIG. 13 shows the case in which "Copy RSS site to mobile phone" is selected on a display screen 56 on the PC side. "Copy RSS site to mobile phone" 57 provides a mechanism that automatically copies the pages, registered as RSS sites, to the mobile phone on an HTML file basis for use by the user who uses RSS.

In addition, in "For users who do not know RSS..." 58, a mechanism is provided to allow users, who do not use RSS, to simply register the sites as "Interested news".

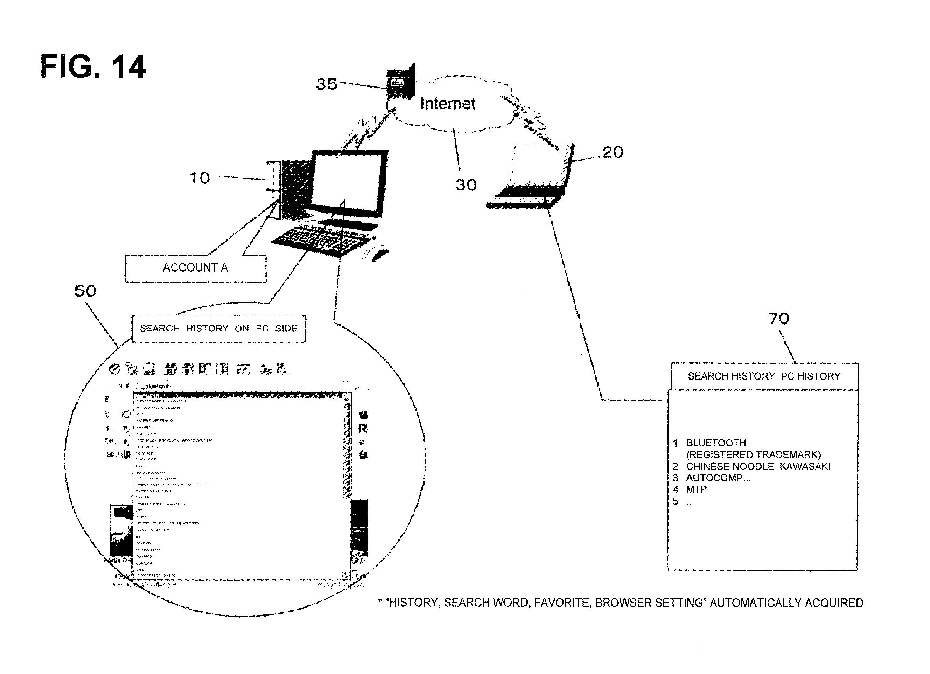

In FIG. 14, the history information on the home PC 10 (search history 50 on PC side) may be directly checked and used on the side of the shared PC 20 via the mobile phone as the search history PC history 70. In this case, the mobile phone has acquired "history, search word, favorites, browser setting" from the home PC 10 automatically.

### INDUSTRIAL APPLICABILITY

The present invention is applicable to a field where Internet services are used with a mobile phone as the authentication key.

The exemplary embodiments and the examples may be changed and adjusted in the scope of the entire disclosure (including claims) of the present invention and based on the basic technological concept. In the scope of the claims of the present invention, various disclosed elements may be combined and selected in a variety of ways. That is, it is to be understood that the present invention includes various modifications and changes that may be made by those skilled in the art according to the entire disclosure including the claims and to the technological concept.

### EXPLANATIONS OF SYMBOLS

- 10: Home PC
- 11,41: Display
- 12: Keyboard
- 13: Mouse
- 14,44: Bluetooth (registered trademark) port
- 15,45: WLAN port
- 16,46: Felica (registered trademark) port
- 17,47: Other communication port
- 20: Shared PC
- 30: Internet
- 35: Server
- 40: Mobile phone
- 42: Ten-key pad
- 43: Cross key
- 60: Near field communication technology
- 100,400: Storage area
- 101: PC browser
- 150: Account A-PC
- 151: Local Settings folder
- 152,452: Cookies folder
- 153,453: Favorite folder
- 154,454: History folder
- 155,455: Registry
- 156,456: Timestamp
- 170: Account B
- 250: User account X-PC
- 401: Mobile browser
- 450: Account A-Mobile
- 460: Internal storage

## Claims

1. An information processing system, wherein a mobile communication device is used as an authentication key when a user logs into an information processing device and information on a personal setting environment in said information processing device and information on application software used in said information processing device are acquired and saved into the mobile communication device, which is used as the authentication key, as personal account information.

2. The information processing system as defined by claim 1, wherein
said information processing device is a personal device used by a user of said mobile communication device and
the information saved in said mobile communication device is made available while an authentication state is maintained by physically connecting the mobile communication device to a plurality of terminal devices used by one user or to one terminal device used by a plurality of users and, when the physical connection between said mobile communication device and said terminal device is broken, the personal account information, temporarily set in said terminal device, is deleted.

3. The information processing system as defined by claim 1 or 2, wherein
a near field communication technology is used to physically connect said information processing device and said mobile communication device, and connection state recognition information, which is set in advance by the near field communication technology, is used for the authentication key.

4. The information processing system as defined by claim 3, wherein
when the near field communication technology is a short-range communication technology, paring of said information processing device and said mobile communication device is used,
when the near field communication technology is a WLAN (Wireless Local Area Network), a mechanism for broadcasting that a connection is made to the other party and a mechanism for returning identification information, which indicates the connection, from an information processing device side to said mobile communication device are used,
when the near field communication technology is a non-contact IC (Integrated Circuit) card, identification information on the non-contact IC card is used, and
when the near field communication technology is a USB (Universal Serial Bus), an IMEI (International Mobile Equipment Identity) is used to recognize the connection state.

5. The information processing system as defined by one of claims 1 to 4, wherein
the personal account information in said information processing device and the personal account information in said mobile communication device are merged at initialization time and the merged information is held as shared information, and
when said information processing device and said mobile communication device enter an authentication state after the initialization, difference information is merged based on information updated in each device after the time the shared information was held last.

6. The information processing system as defined by claim 5, wherein
the personal account information stored in said mobile communication device is used as a master, the difference information is merged in a storage area in said mobile communication device, and the result is written in said information processing device.

7. The information processing system as defined by one of claims 1 to 6, wherein
when the authentication, in which said mobile communication device is used as the authentication key, is established, special-purpose application software is downloaded into said terminal device and the personal account information is acquired from within said mobile communication device using the special-purpose application software.

8. The information processing system as defined by claim 7, wherein
when the communication between said mobile communication device and said terminal device is broken, the special-purpose application software and the personal account information, acquired using the special-purpose application software, are discarded.

9. An information processing device, comprising:
means that performs authentication using a mobile communication device as an authentication key when a user logs into said information processing device; and
means that writes and saves information on a personal setting environment, stored in said information processing device, and information on application software, used in said information processing device, in the mobile communication device, which is used as the authentication key, as personal account information.

10. The information processing device as defined by claim 9, wherein
a near field communication technology is used to physically connect said information processing device and said mobile communication device, and connection state recognition information, which is set in advance by the near field communication technology, is used for the authentication key.

11. The information processing device as defined by claim 10, wherein
when the near field communication technology is a short-range communication technology, paring of said information processing device and said mobile communication device is used,
when the near field communication technology is a WLAN (Wireless Local Area Network), a mechanism for broadcasting that a connection is made to the other party and a mechanism for returning identification information, which indicates the connection, from an information processing device side to said mobile communication device are used,
when the near field communication technology is a non-contact IC (Integrated Circuit) card, identification information on the non-contact IC card is used, and
when the near field communication technology is a USB (Universal Serial Bus), an IMEI (International Mobile Equipment Identity) is used to recognize the connection state.

12. The information processing device as defined by one of claims 9 to 11, wherein
the personal account information in said information processing device and the personal account information in said mobile communication device are merged at initialization time and the merged information is held as shared information, and
when said information processing device and said mobile communication device enter an authentication state after the initialization, difference information is merged based on information updated in each device after the time the shared information was held last.

13. The information processing device as defined by claim 12, wherein
the personal account information stored in said mobile communication device is used as a master, the difference information is merged in a storage area in said mobile communication device, and the result is written in said information processing device.

14. A mobile communication device, that is used as an authentication key when a user logs into an information processing device and that acquires and saves information on a personal setting environment, stored in said information processing device, and information on application software, used in said information processing device, into said mobile communication device, which is used as the authentication key, as personal account information.

15. The mobile communication device as defined by claim 14, wherein
said information processing device is a personal device used by a user of said mobile communication device and
the information saved in said mobile communication device is made available while an authentication state is maintained by physically connecting said mobile communication device to a plurality of terminal devices used by one user or to one terminal device used by a plurality of users and, when the physical connection between said mobile communication device and said terminal device is broken, the personal account information, temporarily set in said terminal device, is deleted.

16. The mobile communication device as defined by claim 14 or 15, wherein
a near field communication technology is used to physically connect said information processing device and said mobile communication device, and connection state recognition information, which is set in advance by the near field communication technology, is used for the authentication key.

17. The mobile communication device as defined by claim 16, wherein
when the near field communication technology is a short-range communication technology, paring of said information processing device and said mobile communication device is used,
when the near field communication technology is a WLAN (Wireless Local Area Network), a mechanism for broadcasting that a connection is made to the other party and a mechanism for returning identification information, which indicates the connection, from an information processing device side to said mobile communication device are used,
when the near field communication technology is a non-contact IC (Integrated Circuit) card, identification information on the non-contact IC card is used, and
when the near field communication technology is a USB (Universal Serial Bus), an IMEI (International Mobile Equipment Identity) is used to recognize the connection state.

18. The mobile communication device as defined by one of claims 14 to 17, wherein
the personal account information in said information processing device and the personal account information in said mobile communication device are merged at initialization time and the merged information is held as shared information, and
when said information processing device and said mobile communication device enter an authentication state after the initialization, difference information is merged based on information updated in each device after the time the shared information was held last.

19. The mobile communication device as defined by claim 18, wherein
the personal account information stored in said mobile communication device is used as a master, the difference information is merged in a storage area in said mobile communication device, and the result is written in said information processing device.

20. The mobile communication device as defined by one of claims 14 to 19, wherein
when the authentication, in which said mobile communication device is used as the authentication key, is established, special-purpose application software is downloaded into said terminal device and the personal account information is acquired from within said mobile communication device using the special-purpose application software.

21. The mobile communication device as defined by claim 20, wherein
when the communication between said mobile communication device and said terminal device is broken, the special-purpose application software and the personal account information, acquired using the special-purpose application software, are discarded.

22. A user information management method for use in a system in which information on a personal setting environment in an information processing device and information on application software used in said information processing device are used as personal account information, said user information management method comprising:
a step of using a mobile communication device as an authentication key when a user logs into said information processing device; and a step of acquiring and saving the personal account information into said mobile communication device used as the authentication key.

23. The user information management method as defined by claim 22, wherein
said information processing device is a personal device used by a user of said mobile communication device, and
the information saved in said mobile communication device is made available while an authentication state is maintained by physically connecting the mobile communication device to a plurality of terminal devices used by one user or to one terminal device used by a plurality of users and, when the physical connection between said mobile communication device and said terminal device is broken, the personal account information, temporarily set in said terminal device, is deleted.

24. The user information management method as defined by claim 22 or 23, wherein
a near field communication technology is used to physically connect said information processing device and said mobile communication device, and connection state recognition information, which is set in advance by the near field communication technology, is used for the authentication key.

25. The user information management method as defined by claim 24, wherein
when the near field communication technology is a short-range communication technology, paring of said information processing device and said mobile communication device is used,
when the near field communication technology is a WLAN (Wireless Local Area Network), a mechanism for broadcasting that a connection is made to the other party and a mechanism for returning identification information, which indicates the connection, from an information processing device side to said mobile communication device are used,
when the near field communication technology is a non-contact IC (Integrated Circuit) card, identification information on the non-contact IC card is used, and
when the near field communication technology is a USB (Universal Serial Bus), an IMEI (International Mobile Equipment Identity) is used to recognize the connection state.

26. The user information management method as defined by one of claims 22 to 25, wherein
the personal account information in said information processing device and the personal account information in said mobile communication device are merged at initialization time and the merged information is held as shared information, and
when said information processing device and said mobile communication device enter an authentication state after the initialization, difference information is merged based on information updated in each device after the time the shared information was held last.

27. The user information management method as defined by claim 26, wherein
the personal account information stored in said mobile communication device is used as a master, the difference information is merged in a storage area in said mobile communication device, and the result is written in said information processing device.

28. The user information management method as defined by one of claims 22 to 27, wherein
when the authentication, in which said mobile communication device is used as the authentication key, is established, special-purpose application software is downloaded into said terminal device and the personal account information is acquired from within said mobile communication device using the special-purpose application software.

29. The user information management method as defined by claim 28, wherein
when the communication between said mobile communication device and said terminal device is broken, the special-purpose application software and the personal account information, acquired using the special-purpose application software, are discarded.

30. A program causing an information processing device to perform:
processing of performing authentication using a mobile communication device as an authentication key when a user logs into said information processing device; and
processing of writing and saving information on a personal setting environment, stored in said information processing device, and information on application software, used in said information processing device, in said mobile communication device, used as the authentication key, as personal account information.

31. A program causing a mobile communication device to perform:
processing of using said mobile communication device as an authentication key when a user logs into an information processing device; and processing of acquiring and saving information on a personal setting environment stored in said information processing device and information on application software used in said information processing device into said mobile communication device, which is used as the authentication key, as personal account information.
